(19) Europäisches Patentamt / European Patent Office / Office européen des brevets

(11) **EP 2 642 299 A1**

(12) **EUROPEAN PATENT APPLICATION**
published in accordance with Art. 153(4) EPC

(43) Date of publication:
**25.09.2013 Bulletin 2013/39**

(51) Int Cl.:
**G01N 35/00** (2006.01)  **G01N 21/01** (2006.01)

(21) Application number: **11841497.8**

(22) Date of filing: **18.10.2011**

(86) International application number:
**PCT/JP2011/073940**

(87) International publication number:
**WO 2012/066893 (24.05.2012 Gazette 2012/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2010 JP 2010257446**

(71) Applicant: **Hitachi High-Technologies Corporation Tokyo 105-8717 (JP)**

(72) Inventors:
• **YOSHIKAWA, Keiko**
  **Hitachinaka-shi**
  **Ibaraki 312-8504 (JP)**

• **YAMAZAKI, Hajime**
  **Hitachinaka-shi**
  **Ibaraki 312-8504 (JP)**

(74) Representative: **Calderbank, Thomas Roger**
  **Mewburn Ellis LLP**
  **33 Gutter Lane**
  **London**
  **EC2V 8AS (GB)**

(54) **AUTOMATIC ANALYSIS DEVICE**

(57) An automatic analyzing apparatus which can make an adjustment to a target temperature so as to stabilize the light intensity of an LED and also can make the adjustment to that temperature in a short time is provided. The automatic analyzing apparatus in which an LED is used for a light source 114 includes a temperature adjusting mechanism 201 for the LED, and the temperature adjusting mechanism 201 includes a metal member 202 provided with the light source 114, a pair of metal pipes (water-flowing pipes) 203 buried in the metal member 202 and allowing constant-temperature bath water to flow therein, and pins (small metal piece members) 204 bringing only a heat-generating lead 252 of the light source 114 into direct contact with the metal member 202. Therefore, the temperature adjusting mechanism 201 can make an adjustment to a target temperature so as to stabilize the light intensity of the LED, and the adjustment to that temperature can be made in a short time.

FIG. 2A

FIG. 2B

FIG. 2C

**Description**

**TECHNICAL FIELD**

The present invention relates to an automatic analyzing apparatus which automatically analyzes a biological sample component such as blood, and in particular to a temperature adjusting mechanism of a measuring unit using an LED (Light-Emitting Diode) as a light source.

**BACKGROUND ART**

In recent years, the technological developments have increased the light intensity of LEDs (Light-Emitting Diodes) and have expanded the wavelength variations thereof. Furthermore, by making use of advantages such as high energy efficiency for light emission and small size, the range of application thereof has been expanded in various industrial fields.

Also in the field of automatic analyzing apparatus for clinical laboratory tests, demands for energy and space savings and cost reduction of the apparatus are high, and as one of the means for responding to these, the apparatus using an LED as a light source has been increasing.

When an LED is used as a light source, it is the stabilization of the light intensity that becomes a problem. It is generally known that the LED gives off heat from itself when it is energized and the light intensity and wavelength thereof are changed when temperature of a P/N junction is changed.

An automatic analyzing apparatus measures a concentration of a blood sample by irradiating a sample to be measured with light to measure a change in light intensity. Therefore, stabilization of the light intensity as a base value is essential. Also, from the demands of the market, it is desired that the start-up time of the apparatus is more reduced, and the light intensity is required to be stabilized in a shorter time.

When an LED is used as a measurement light source of an automatic analyzing apparatus, for example, Patent Document 1 suggests to perform the temperature control by mounting the LED on a member with a large heat capacity in order to obtain a stable light intensity.

**PRIOR ART DOCUMENTS**

**PATE DOCUMENTS**

Japanese Patent Application Laid-Open Publication No. 2004-101295

**SUMMARY OF THE INVENTION**

**PROBLEMS TO BE SOLVED BY THE INVENTION**

Incidentally, when the junction temperature of the LED increases, the light emission amount thereof tends to decrease. Since the decrease in light intensity in a measurement system using light leads to the decrease in detection sensitivity, when the LED is used as a light source of an automatic analyzing apparatus for clinical laboratory test, heat generated in the LED is required to be efficiently removed. Also, the fluctuation of the LED light intensity due to temperature change has to be prevented. Furthermore, it is also necessary to achieve a stable state at a target temperature in a shorter time.

Heat of the LED is generated at a P/N junction, and is propagated by thermal conduction to either one of two leads that is connected to a light-emission lead. Therefore, by cooling down the lead to which heat is transmitted and stabilizing its temperature, the temperature of the P/N junction is stabilized to be low, so that the decrease in the light intensity is suppressed and the stable measurement can be achieved.

However, a lead has a cross section of about 0.5 mm to 1 mm square and is extremely thin in general, and a metal member with high thermal conductivity is required to be brought into contact with the lead in order to absorb heat by thermal conduction. On the other hand, a current which makes the LED emit light flows through a lead wire, and the lead wire is required to be electrically insulated. Thus, an insulating sheet is required to be provided between the lead and the metal member. Since a material with low electric conductivity generally has a low thermal conductivity, if an insulating sheet is provided between the lead and the metal member, the heat absorption amount from the LED is significantly decreased, and as a result, the temperature cannot be sufficiently adjusted and stabilization of the light intensity of the LED cannot be expected.

An object of the present invention is to provide an automatic analyzing apparatus capable of making an adjustment to a target temperature so as to stabilize the light intensity of an LED and also capable of making the adjustment to that temperature in a short time.

The above and other objects and novel characteristics of the present invention will be apparent from the description of the present specification and the accompanying drawings.

## MEANS FOR SOLVING THE PROBLEMS

The following is a brief description of an outline of the typical invention disclosed in the present application.

More specifically, an automatic analyzing apparatus according to the present invention is an automatic analyzing apparatus including: a light-emitting diode light source; and a temperature adjusting mechanism for the light-emitting diode light source, and the temperature adjusting mechanism is made up of: a metal member provided with the light-emitting diode light source; a water-flowing pipe buried in the metal member and allowing constant-temperature bath water to flow therein; and a small metal piece member bringing only a heat-generating lead of the light-emitting diode light source into direct contact with the metal member.

## EFFECTS OF THE INVENTION

The effects obtained by typical embodiments of the invention disclosed in the present application will be briefly described below.

According to the present invention, in the automatic analyzing apparatus, since only the lead of the LED from which heat is generated is brought into direct contact with the metal member of the temperature adjusting mechanism, cooling is carried out by transmitting heat of the constant-temperature bath water only to the lead, which is a part required for temperature adjustment of the LED, from the metal member in a short time. In other words, the temperature adjusting mechanism can make an adjustment to a target temperature so as to stabilize the light intensity of the LED, and the adjustment to that temperature can be made in a short time.

## BRIEF DESCRIPTIONS OF THE DRAWINGS

FIG. 1 is a schematic configuration diagram of an automatic analyzing apparatus of the present invention;

FIG. 2A is a plan view of a temperature adjusting mechanism of the present invention provided with pins;

FIG. 2B is a sectional view of the temperature adjusting mechanism taken along an A-A line of FIG. 2A;

FIG. 2C is a bottom view of the temperature adjusting mechanism;

FIG. 3A is a plan view of a temperature adjusting mechanism of an invention other than the present invention provided with a thermally conductive sheet;

FIG. 3B is a sectional view of the temperature adjusting mechanism taken along an A-A line of FIG. 3A;

FIG. 3C is a bottom view of the temperature adjusting mechanism;

FIG. 4A is a plan view of a temperature adjusting mechanism of the present invention provided with pins and an insulating member;

FIG. 4B is a sectional view of the temperature adjusting mechanism taken along an A-A line of FIG. 4A;

FIG. 4C is a bottom view of the temperature adjusting mechanism;

FIG. 5A is a plan view of a verification model in the temperature adjusting mechanism of FIG. 3;

FIG. 5B is a sectional view of the temperature adjusting mechanism taken along an A-A line of FIG. 5A; and

FIG. 5C is a bottom view of the temperature adjusting mechanism.

## BEST MODE FOR CARRYING OUT THE INVENTION

Hereinafter, embodiments of the present invention will be described in detail with reference to the accompanying drawings. Note that components having the same function are denoted by the same reference symbols throughout the drawings for describing the embodiments, and the repetitive description thereof will be omitted as much as possible.

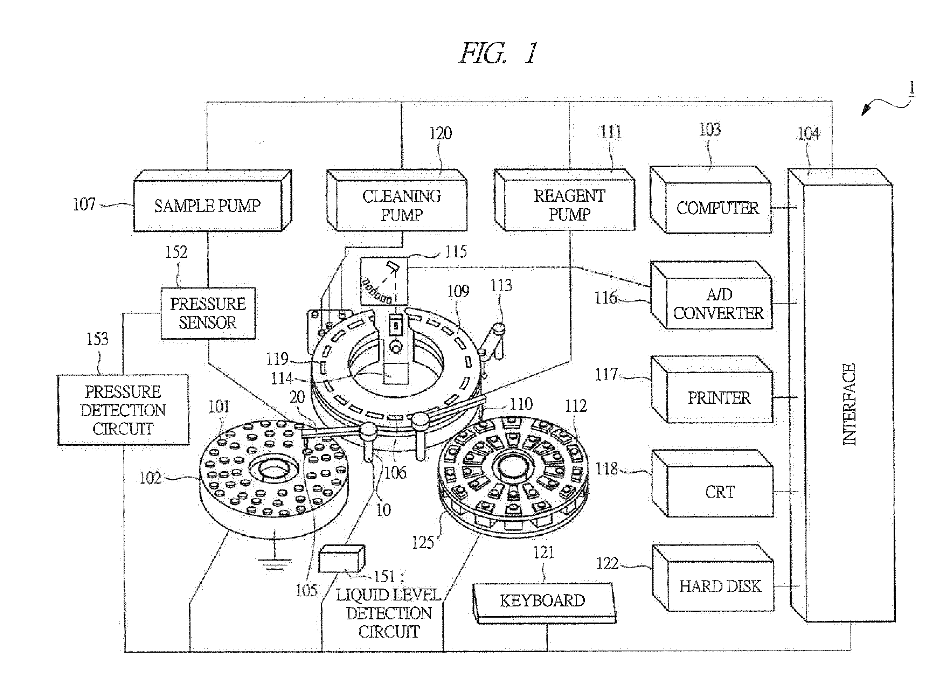

FIG. 1 is a schematic configuration diagram of an automatic analyzing apparatus of the present invention. Note that, since the function of each unit of FIG. 1 is publicly known, detailed descriptions thereof are omitted.

In the configuration of an automatic analyzing apparatus 1, while moving vertically and rotating, a sampling arm 20 of a sampling mechanism 10 sucks a test sample in a sample container 101 placed on a sample disk 102 rotating laterally by using a sample dispensing probe 105 attached to the sampling arm 20, and discharges the test sample to a reaction container 106. As can be seen from FIG. 1, the sample disk 102 has a structure which can be applied to a universal arrangement in which the sample container 101 can be directly disposed not only on the sample disk 102, but also on a test tube (not shown).

The configuration of the automatic analyzing apparatus 1 in FIG. 1 will be further described. The sample dispensing probe 105 performs operations of sucking and discharging a sample along with the operation of a sample syringe pump 107. A reagent dispensing probe 110 performs operations of sucking and discharging a reagent along with the operation of a reagent syringe pump 111. The sample syringe pump 107 and the reagent syringe pump 111 can perform a fine operation, and also can strictly manage the dispensing accuracy under the control of a computer 103.

An analytical item to be analyzed for each sample is inputted from an input device such as a keyboard 121 or a screen of a CRT 118. The operation of each unit in the automatic analyzing apparatus 1 is controlled by the computer 103.

Along with the intermittent rotation of the sample disk 102, the sample container 101 is transferred to a sample suction position, and the sample dispensing probe 105 descends into the sample container 101 at a stop. When the tip of the sample dispensing probe 105 is brought into contact with the liquid level of the sample as a result of the descending operation, a detection signal is outputted from a liquid level detection circuit 151, and the computer 103 controls to stop the descending operation of a driving unit of the sampling arm 20 based on the signal.

Next, after a predetermined amount of the sample is sucked into the sample dispensing probe 105, the sample dispensing probe 105 ascends to a top dead center. While the sample dispensing probe 105 is sucking a predetermined amount of the sample, the fluctuation in pressure in a flow path between the sample dispensing probe 105 and the sample syringe pump 107 during the sucking operation is monitored by a pressure detection circuit 153 by using a signal from a pressure sensor 152. If an anomaly is detected in the pressure fluctuation during the suction, there is a high possibility that a predetermined amount has not been sucked, and therefore an alarm is provided to analytical data in that case.

Next, the sampling arm 20 turns around in a horizontal direction, causes the sample dispensing probe 105 to descend at the position of the reaction container 106 on a reaction disk 109, and then discharges the retained sample into the reaction container 106. Next, the reaction container 106 containing the sample is moved to a reagent addition position. On a rotatable reagent disk 125, reagent bottles 112 corresponding to a plurality of analytic items to be analyzed are disposed. The reagent dispensing probe 110 attached to the sampling arm 20 dispenses a predetermined amount of the reagent from the reagent bottle 112 to the reaction container 106. A mixture in the reaction container 106 having the sample and the reagent added thereto is agitated by an agitator 113.

The reaction container 106 having the mixture accommodated therein is transferred to a position between a light source 114 and a photometer 115 serving as measuring means, and the light intensity is measured by the photometer 115 based on irradiated light from the light source 114 to the reaction container 106. A light measurement signal is outputted for print through an A/D converter 116 and via an interface 104 to a printer 117, or is outputted onto the screen of the CRT 118 and stored in a hard disk 122 serving as a memory. The reaction container 106 for which light measurement has been completed is cleaned at the position of a cleaning mechanism 119. A cleaning pump 120 supplies washing water to the reaction container 106 and discharges waste liquid from the reaction container 106. In the example of FIG. 1, a plurality of rows of container holders are formed on the sample disk 102 so that a plurality of rows of sample containers 101 can be concentrically set, and one position for sample suction by the sample dispensing probe 105 is set for each row.

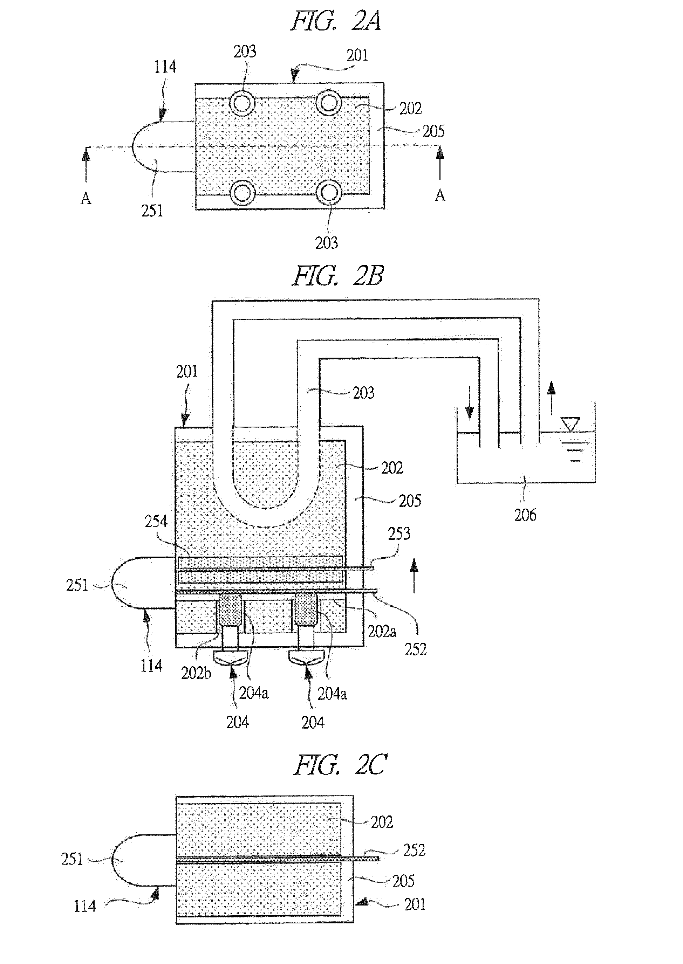

As the light source 114, an LED (Light-Emitting Diode) light source is used. Also, in order to stabilize the changes in the light intensity of the LED due to the temperature and enable the measurement with high reproducibility, a temperature adjusting mechanism for the LED is provided. FIG. 2A is a plan view of a temperature adjusting mechanism of the present invention provided with pins, FIG. 2B is a sectional view thereof taken along an A-A line of FIG. 2A, and FIG. 2C is a bottom view thereof. Note that, for convenience of understanding, a constant-temperature bath is also shown in each sectional view of FIG. 2 and subsequent figures. As shown in FIG. 2A to FIG. 2C, a temperature adjusting mechanism 201 mainly includes a metal member 202, a pair of metal pipes (water-flowing pipes) 203, and a pair of metal pins (small metal piece members) 204.

The entire metal member 202 is covered with a heat insulator 205. In the metal member 202, a portion of the metal pipe 203 bent in a U shape is buried, and water from a constant-temperature bath 206 (constant-temperature bath water) flows into this metal pipe 203 to adjust the metal member 202 to a target temperature. As a material of the metal member 202, for example, copper, iron, or the like is preferable because of high thermal conductivity.

The light source 114 is made up of a light-emitting unit 251 and leads 252 and 253 extending from the light-emitting unit 251. In the example of FIG. 2, only the leads 252 and 253 are buried in the metal member 202. However, the light-emitting unit 251 may also be buried in the metal member 202. Since the LED has a structure in which either one of the leads is connected to a light-emitting lead, only the one lead generates heat at the time of light emission. In the example of FIG. 2, the lead 252 generates heat, but the lead 253 does not generate heat. As shown in FIG. 2B and FIG. 2C, of these leads 252 and 253, only the heat-generating lead 252 abuts on the tips of the pins 204 of the temperature adjusting mechanism 201, and is pushed by these pins 204 to be brought into direct contact with the metal member 202.

More specifically, as particularly shown in FIG. 2B, the metal member 202 has a gap 202a formed at a portion where the heat-generating lead 252 is buried. Also, a pair of through holes 202b each of which accommodates the pin 204 so that its main body 204a can project from and retract into the through hole is formed between the edge of the metal member 202 and the gap 202a. Thus, when the pin main bodies 204a projecting into the gap 202a abut on the lead 252, the lead 252 is pushed onto a wall part of the metal member on a back side of the gap 202a (in an arrow direction in the drawing) to be brought into contact with the metal member 202.

On the other hand, the non-heat-generating lead 253 is covered with a heat insulator (insulating member) 254 with insulating properties so as not to be influenced by the temperature change of the metal member 202. Note that preferable materials of the pins 204 are similar to those of the metal member 202.

With the structure described above, thermal resistance between the metal member 202 and the lead 252 is nearly eliminated, and therefore heat is transferred to the lead 252 in approximately the same time as the time in which heat of constant-temperature water is transferred to the metal member 202. A contact surface between the metal member 202 and the metal pipes 203 is taken as widely as possible, whereby heat transfer efficiency is further improved, and as a result, the temperature can be adjusted to the target temperature in a short time.

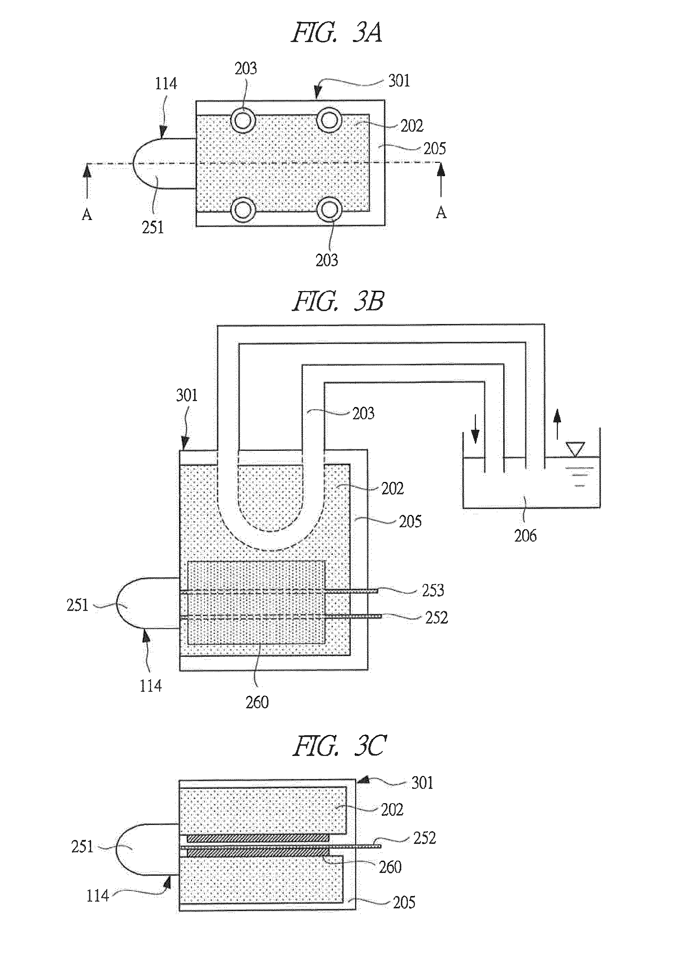

FIG. 3A is a plan view of a temperature adjusting mechanism of the invention other than the present invention provided with a thermally conductive sheet, FIG. 3B is a sectional view thereof taken along an A-A line of FIG. 3A, and FIG. 3C is a bottom view thereof. A temperature adjusting mechanism 301 shown in FIG. 3 is substantially different from the temperature adjusting mechanism 201 of the present invention in that no pin is provided. In the temperature adjusting mechanism 301, the leads 252 and 253 are covered with a thermally conductive sheet 260 capable of transmitting heat of the metal member 202 and made of a soft insulating material in order to improve adhesiveness of the leads 252 and 253 to the metal member 202. As shown in FIG. 3C, the lead 252 is in indirect contact with the metal member 202 via the thermally conductive sheet 260.

In this case, heat of constant-temperature water is transmitted to the metal member 202 in a short time, but a thermal conductivity of the thermally conductive sheet 260 described above is about 1/4000 to 1/6000 compared with that of a metal, and therefore thermal resistance is high after all. Moreover, since lead dimensions of a general LED are such that the cross-sectional area is about 0.5 mm and the length is about 20 mm, the heat transfer area is extremely small, and thermal conduction efficiency is low.

In other words, in the present invention, since the pins 204 that bring only the heat-generating lead 252 into direct contact with the metal member 202 are provided in the temperature adjusting mechanism of the LED, heat of the metal member 202 can be transmitted only to the lead 252 in a short time, and temperature adjustment for cooling to the target temperature can be made in a short time. This is particularly advantageous in the measurement of scattered light, in which values tend to vary due to that the measurement is carried out only with absolute values, because it is possible to promptly achieve the state in which desired reproducibility is obtained. Also, since influences due to temperature change of the light source 114 can be further decreased by covering the non-heat-generating lead 253 with the heat insulator 254, the light intensity of the LED can be further stabilized, and measurement with higher reproducibility can be made.

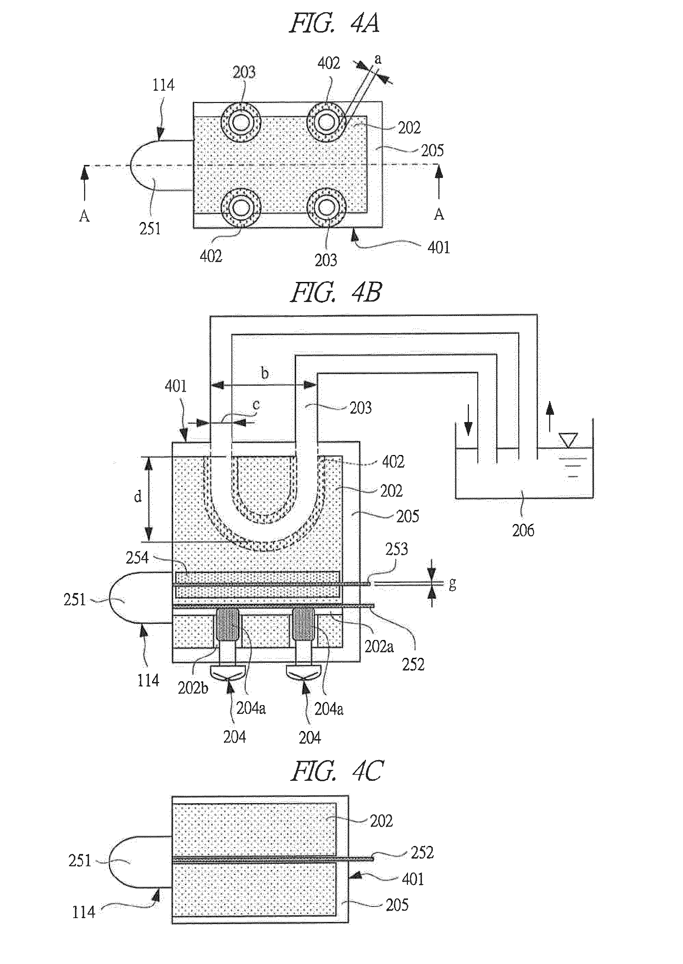

FIG. 4A is a plan view of a temperature adjusting mechanism of the present invention provided with pins and an insulating member, FIG. 4B is a sectional view thereof taken along an A-A line of FIG. 4A, and FIG. 4C is a bottom view thereof. A temperature adjusting mechanism 401 shown in FIG. 4 is an example in which an LED light source having the heat-generating lead 252 whose electric potential is lower than that of the non-heat-generating lead 253 is used.

In the temperature adjusting mechanism 401, a portion of each metal pipe 203 buried in the metal member 202 is covered with an insulating member 402 in order to electrically insulate the metal pipes 203 and the metal member 202. As the insulating member 402, for example, a material similar to that of the thermally conductive sheet 260 can be suitably used. Note that the configuration other than that is similar to that of the temperature adjusting mechanism 201.

In this case, the insulating member 402 covering the metal pipes 203 serves as a heat resistance, but since a significantly wider heat transfer area can be taken compared with the case in which the thermally conductive sheet 260 is present between the leads 252 and 253 and the metal member 202 like in the temperature adjusting mechanism 301, thermal conduction efficiency is extremely high. Thus, also when an element like this is used, temperature adjustment can be efficiently made in a short time compared with the case in which temperature adjustment is made in the state where the leads 252 and 253 are covered with the thermally conductive sheet 260.

In the foregoing, the invention made by the inventors of the present invention has been concretely described based on the embodiments. However, it is needless to say that the present invention is not limited to the foregoing embodiments and various modifications and alterations can be made within the scope of the present invention.

**Examples**

Thermal conduction efficiency of the temperature adjusting mechanism is modeled and verified.

(Verification 1)

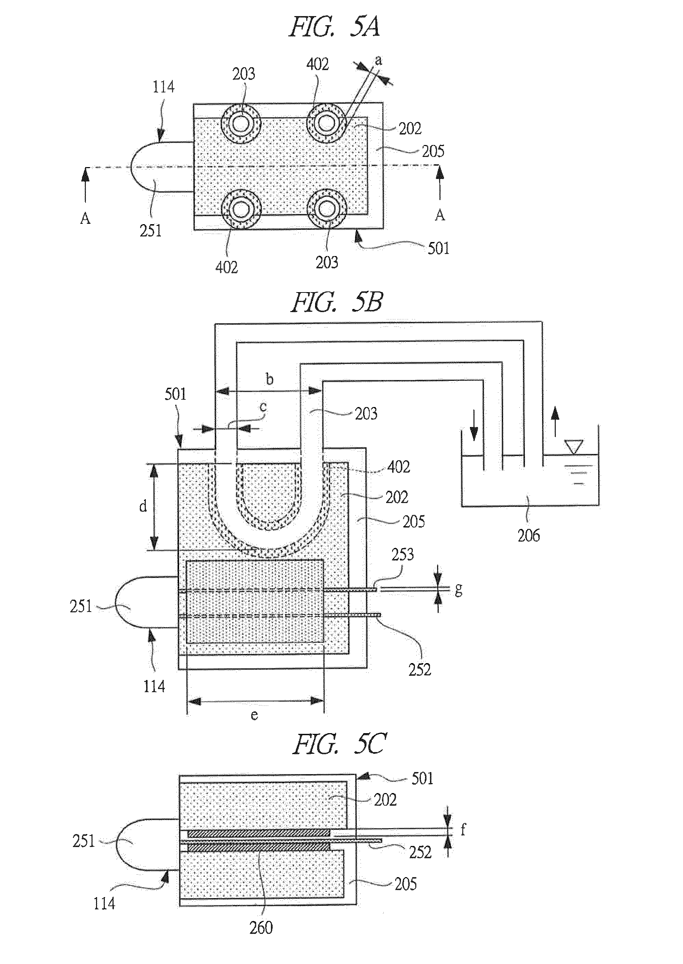

FIG. 5A is a plan view of a verification model in the temperature adjusting mechanism of FIG. 3, FIG. 5B is a sectional view thereof taken along an A-A line of FIG. 5A, and FIG. 5C is a bottom view thereof.

In the configuration of a temperature adjusting mechanism 501 of this verification model, in order to make conditions uniform with those of verification of the temperature adjusting mechanism 401 shown in FIG. 4, which will be described further below, the insulating member 402 is provided to the metal pipes 203 of the temperature adjusting mechanism 301 of FIG. 3.

The insulting member 402 is a thermally conductive sheet with a thermal conductivity of 0.8 W/m·K, and a thickness a thereof is 1 mm. The metal pipe 203 has a width b of 40 mm, a pipe diameter c of 4 mm, and a buried depth d into the metal member 202 of 20 mm. The thermally conductive sheet 260 is made of a material similar to that of the insulating member 402 and has a length e of 10 mm and a thickness f of 1 mm. Also, the leads 252 and 253 are formed to have a side g of 0.5 mm. As a temperature condition, the heat-generating lead 252 at 47°C is assumed to be cooled down to 37°C.

The amount of thermal conduction per unit time (second) under the conditions described above is calculated by applying to the following equations.

$$Q \text{ (heat quantity)} = \lambda \text{ (thermal conductivity)} \times S \text{ (thermally conductive area)} \times (T_1 - T_2 \text{ (temperature change)}) / h \text{ (thickness)}$$

$$\lambda \text{ (thermal conductivity)} = \text{thermally conductive sheet } 260 = 0.8 \text{ W/m·K}$$

S (thermally conductive area) = area in which the heat-generating lead 252 and the thermally conductive sheet 260 are in contact with each other = 0.5 mm $\times$ 10 mm $\times$ 2 (because upper and lower parts of the lead 252 are in contact with the thermally conductive sheet 260) = 10 mm$^2$ = 10 $\times$ 10$^{-6}$ m$^2$

$$T_1 - T_2 \text{ (temperature change)} = 47 - 37 = 10 \text{ K}$$

$$h \text{ (thickness)} = \text{thickness } f \text{ of thermally conductive sheet } 260 = 1 \text{ mm} = 1 \times 10^{-3} \text{ m}$$

Accordingly, the thermal conduction efficiency in the configuration of FIG. 5 is as follows.

$$Q = 0.8 \text{ W/m·K} \times 10 \times 10^{-6} \text{ m}^2 \times 10 \text{ K} / 1 \times 10^{-3} \text{ m} = 8 \times 10^{-2} \text{ W/S} = 0.08 \text{ J}$$

(Verification 2)

Next, the temperature adjusting mechanism 401 of the present invention shown in FIG. 4 is modeled and verified with the same dimensions a to d and g as those of the temperature adjusting mechanism 501 of FIG. 5. It goes without saying that, since the thermally conductive sheet 260 is not present in the temperature adjusting mechanism 401, it is not necessary to take the dimensions e and f into consideration.

In the verification of this temperature adjusting mechanism 401, since the lead 252 and the metal member 202 are both made of metal, it is assumed that no thermal resistance is present and heat exchange occurs between the metal pipe 203 and the metal member 202.

$$\lambda \text{ (thermal conductivity) = thermally conductive sheet (insulating member) } 402 = 0.8 \text{ W/m·K}$$

S (thermally conductive area) = 4 (pipe diameter) $\times \pi \times$ 1/2 (1/2 of a pipe circumference) $\times$ 36 $\times \pi \times$ 1/2 + 2 + 2 (length of pipe center part is used for simplification) $\times$ 2 (because upper and lower parts of the metal pipe 203 are in contact with the thermally conductive sheet 402) = 760.13 mm$^2$ = 760 $\times$ 10$^{-6}$ m$^2$

$$T_1 - T_2 \text{ (temperature change) = } 47 - 37 = 10 \text{ K}$$

$$h \text{ (thickness) = thickness f of the thermally conductive sheet } 260 = 1 \text{ mm} = 1 \times 10^{-3} \text{ m}$$

Accordingly, thermal conduction efficiency in the configuration of FIG. 5 is as follows.

$$Q = 0.8 \text{ W/m·K} \times 760 \times 10^{-6} \text{ m}^2 \times 10 \text{ K} / 1 \times 10^{-3} \text{ m} = 6.08 \text{ W/S} = 6.08 \text{ J}$$

Although the verification described above is merely an example, while a thermal conductivity per second of the temperature adjusting mechanism 501 of FIG. 5 which has a general configuration is 0.08 J, a thermal conductivity of the temperature adjusting mechanism 401 of FIG. 4 of the present invention is 6.08 J. Thus, the thermal conduction efficiency of the temperature adjusting mechanism 401 is 76 times larger than that of the temperature adjusting mechanism 501. Accordingly, it can be understood that, while the amount of thermal conduction is determined by the surface area of the thin lead 252 in the case of FIG. 5, since the lead 252 and the metal member 202 are pressed and brought into tight contact with each other to adjust the temperature of the metal member 202 in the case of FIG. 4, heat can be instantaneously transmitted to the lead 252. In other words, in the temperature adj usting mechanism of the present invention, since it is possible to take a large contact surface between the water-flowing pipes and the metal member, the entire thermal conduction efficiency can be increased, and an adjustment to the target temperature can be made in a shorter time.

## INDUSTRIAL APPLICABILITY

The present invention relates to an automatic analyzing apparatus which automatically analyzes a biological sample component such as blood, and can be widely applied to an apparatus or system having a temperature adjusting mechanism of a measuring unit using an LED (light-emitting diode) as a light source.

## Claims

1. An automatic analyzing apparatus comprising: a light-emitting diode light source; and a temperature adjusting mechanism for the light-emitting diode light source,
   wherein the temperature adjusting mechanism is made up of:

   a metal member provided with the light-emitting diode light source; a water-flowing pipe buried in the metal member and allowing constant-temperature bath water to flow therein; and a small metal piece member bringing only a heat-generating lead of the light-emitting diode light source into direct contact with the metal member.

2. The automatic analyzing apparatus according to claim 1,
   wherein a non-heat-generating lead of the light-emitting diode light source is covered with an insulating member.

3. The automatic analyzing apparatus according to claim 1 or 2,

wherein the water-flowing pipe is covered with an insulating member.

FIG. 1

SAMPLE PUMP — 107

CLEANING PUMP — 120

REAGENT PUMP — 111

COMPUTER — 103

INTERFACE — 104

PRESSURE SENSOR — 152

PRESSURE DETECTION CIRCUIT — 153

A/D CONVERTER — 116

PRINTER — 117

CRT — 118

KEYBOARD — 121

HARD DISK — 122

LIQUID LEVEL DETECTION CIRCUIT — 151

115

109

113

119

114

20

110

112

101

102

106

10

105

125

9

EP 2 642 299 A1

## FIG. 2A

## FIG. 2B

## FIG. 2C

*FIG. 3A*

*FIG. 3B*

*FIG. 3C*

## FIG. 4A

## FIG. 4B

## FIG. 4C

## FIG. 5A

## FIG. 5B

## FIG. 5C

## INTERNATIONAL SEARCH REPORT

| | International application No. |
|---|---|
| | PCT/JP2011/073940 |

A. CLASSIFICATION OF SUBJECT MATTER
*G01N35/00*(2006.01)i, *G01N21/01*(2006.01)i

According to International Patent Classification (IPC) or to both national classification and IPC

B. FIELDS SEARCHED

Minimum documentation searched (classification system followed by classification symbols)
G01N1/00-1/36, G01N21/00-21/01, G01N21/17-21/61, G01N21/84-21/958,
G01N35/00-37/00, G01J1/00-1/60, G01J11/00, H01L33/00-33/64

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2010/117026 A1  (Hitachi High-Technologies Corp.), 14 October 2010 (14.10.2010), paragraphs [0038] to [0039]; fig. 9 to 10 (Family: none) | 1-3 |
| A | WO 2010/013777 A1  (Hitachi High-Technologies Corp.), 04 February 2010 (04.02.2010), paragraph [0018]; fig. 5 & US 2011/0110822 A      & EP 2317304 A1 & WO 2010/013777 A1     & CN 102089644 A | 1-3 |

☒  Further documents are listed in the continuation of Box C.          ☐   See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 December, 2011 (16.12.11) | 27 December, 2011 (27.12.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2011/073940 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-101295 A  (Fuji Kiki Kogyo Kabushiki Kaisha), 02 April 2004 (02.04.2004), paragraph [0024]; fig. 3 (Family: none) | 1-3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004101295 A